# FASCICULE DE BREVET EUROPEEN

(11) **EP 2 090 862 B1**
(45) Date de publication et mention de la délivrance du brevet: **16.03.2011**
(21) Numéro de dépôt: 09000908.5
(22) Date de dépôt: 23.01.2009
(51) Int. Cl.: G01B 7/14, B60C 23/06, G01M 17/02

(54) **Procédé de détermination de la longueur de l'empreinte sur le sol d'un pneumatique d'une roue d'un véhicule**
Verfahren zur Bestimmung der Länge des Abdrucks eines Fahrzeugreifens auf dem Boden
Method for determining the length of the contact surface of a vehicle wheel on the ground

(30) Priorité: 15.02.2008 FR 0800830
(43) Date de publication de la demande: 19.08.2009
(73) Titulaire: Continental Automotive France, 31100 Toulouse (FR)
(72) Inventeur: Vassilieff, Youri, 31400 Toulouse (FR); Boukraa, Riad, 34500 Béziers (FR)

(56) Documents cités:
- WO-A-01/94168
- DE-A1- 19 937 078
- JP-A- 2003 065 871
- US-A1- 2004 100 100
- US-A1- 2007 151 334

## Description

L'invention concerne un procédé de détermination, lors du roulage d'un véhicule, de la longueur de l'empreinte sur le sol d'un pneumatique d'une roue du dit véhicule.

De plus en plus de véhicules automobiles possèdent des systèmes de surveillance et/ou de mesures de paramètres comportant des capteurs montés sur le dit véhicule.

A titre d'exemple concernant de tels systèmes, il peut être cité les systèmes de surveillance de la pression des pneus comportant des capteurs montés sur chacune des roues de véhicules, dédiés à la mesure de paramètres de fonctionnement, tels que pression, température... des pneumatiques équipant ces roues, et destinés à informer le conducteur de toute variation anormale du paramètre mesuré. Une détermination de tels paramètres est décrite dans le document WO 01/94168.

Outre la mesure de ces paramètres classiques destinée à fournir une information directe sur des paramètres de fonctionnement des roues d'un véhicule, il est également apparu intéressant de mesurer un autre paramètre consistant en la longueur de l'empreinte sur le sol des pneumatiques des roues du véhicule. Le paramètre est mesuré dans les documents US 2004/0100100 et JP 2003 065871.

La détermination de cette longueur d'empreinte sur le sol des pneumatiques fournit, en effet, une information utilisable à des fins diverses telles que notamment :
- calcul de la charge sollicitant le pneumatique,
- fourniture d'un paramètre supplémentaire de gestion des calculateurs de freinage (ABS...) et d'anti-patinage,
- détermination de l'état, en roulage ou à l'arrêt, du véhicule,
- surveillance de la pression : diagnostic de dégonflage anormal d'un pneumatique lors d'une augmentation de l'empreinte mesurée.

A l'heure actuelle, la technique utilisée pour déterminer cette empreinte d'un pneumatique consiste à solidariser un accéléromètre directement sur l'intérieur du pneumatique, par exemple par collage, et à déduire la longueur de l'empreinte à partir du signal délivré par le dit accéléromètre.

Cette technique présente toutefois deux inconvénients majeurs. En effet, et en premier lieu, les accéléromètres étant positionnés dans le pneumatique sont soumis à des sollicitations importantes (chocs...) qui se traduisent par des détériorations fréquentes des dits accéléromètres.

De plus, de tels accéléromètres ont des durées de vie limitées par celle du pneu puisqu'ils en sont solidaires.

La présente invention vise à pallier ces inconvénients et a pour objectif principal de fournir un procédé de détermination de l'empreinte sur le sol d'un pneumatique, très performant en termes de fiabilité et de robustesse, dont la mise en oeuvre génère, en outre, un coût de revient global notablement inférieur à celui généré par la mise en oeuvre d'une méthode actuelle utilisant des accéléromètres.

A cet effet, l'invention vise un procédé de détermination, lors du roulage d'un véhicule, de la longueur de l'empreinte sur le sol d'un pneumatique comportant une armature métallique, chaussant une jante de roue du dit véhicule et un capteur magnétique sur la jante, le dit procédé consistant à:
- analyser le signal représentatif du champ magnétique mesuré par le dit capteur magnétique, de façon à détecter les variations du champ magnétique résultant des déformations que subit une zone circonférentielle du pneumatique située en regard du capteur magnétique, lorsque, respectivement, la dite zone circonférentielle rentre en contact avec le sol et quitte le sol,
le dit procédé étant caractérisé en ce qu'il consiste à:
- déterminer l'intervalle de temps séparant l'instant ou la zone circonférentielle entre en contact avec le sol et l'instant ou elle quitte ce sol, et
- déterminer l'empreinte de la zone en contact avec le sol pendant cet intervalle de temps en tenant compte de la vitesse de rotation de la roue.

L'invention consiste donc à détecter les déformations que subit une zone circonférentielle d'un pneumatique lorsque cette dernière rentre en contact avec le sol puis quitte le sol, déformations qui se traduisent par une variation de la distance séparant la dite zone de pneumatique de la jante (phénomène d'écrasement puis de relâchement), et donc par une variation du champ magnétique produit, au niveau de la jante, par l'armature métallique du pneumatique, et mesuré par le capteur magnétique.

La mesure de la longueur de l'empreinte sur le sol d'un pneumatique nécessite donc, selon l'invention, un simple capteur magnétique monté sur la jante de roue et donc à l'abri des chocs que subit le dit pneumatique.

A titre d'exemple, un tel capteur magnétique peut consister, selon l'invention, en une simple bobine, un capteur à effet Hall, ou un capteur magnéto résistif (MR ou GMR).

De plus, du fait du positionnement du capteur magnétique sur la jante de roue, ce dernier peut avantageusement être intégré dans un boîtier électronique d'un système de surveillance de la pression des pneus des paramètres de fonctionnement d'une roue du véhicule, de sorte que les données issues de ce capteur magnétique sont transmises avec les trames de données issues des autres capteurs intégrés dans le boîtier électronique.

Selon un mode de mise en oeuvre avantageux, on positionne le capteur magnétique de façon que le dit capteur magnétique présente un axe de sensibilité maximale s'étendant parallèlement à l'axe de rotation de la roue, de sorte que le capteur magnétique s'avère insensible aux variations du champ magnétique terrestre lors de la rotation de la roue.

Par ailleurs, afin d'augmenter le champ magnétique produit par l'armature métallique des pneumatiques, on réalise avantageusement une magnétisation préalable de l'armature métallique du pneumatique dans au moins la zone circonférentielle du dit pneumatique destinée à se trouver en regard du capteur magnétique. En outre le pneu est naturellement magnétisé lors de sa fabrication car l'élongation des fils d'acier qui renforcent la bande de roulement emprisonne un champ magnétique dans le caoutchouc. Il ne se démagnétisera plus (à l'image d'un disque dur).

De plus, cette magnétisation de l'armature métallique du pneumatique est avantageusement réalisée selon un axe de magnétisation parallèle à l'axe de sensibilité maximale du capteur magnétique.

A titre de mode de mise en oeuvre avantageux, une telle magnétisation peut ainsi être réalisée dans la seule zone circonférentielle du pneumatique disposée en regard du capteur magnétique, au moyen d'un électroaimant, et après montage du pneumatique sur une jante équipée du capteur magnétique.

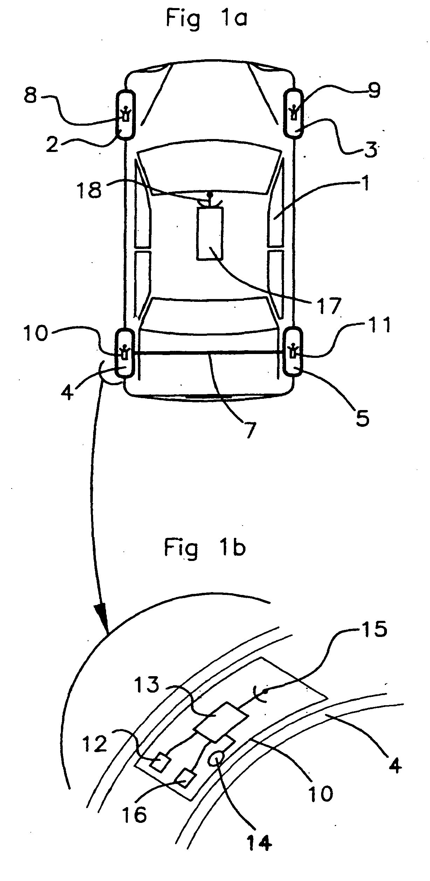

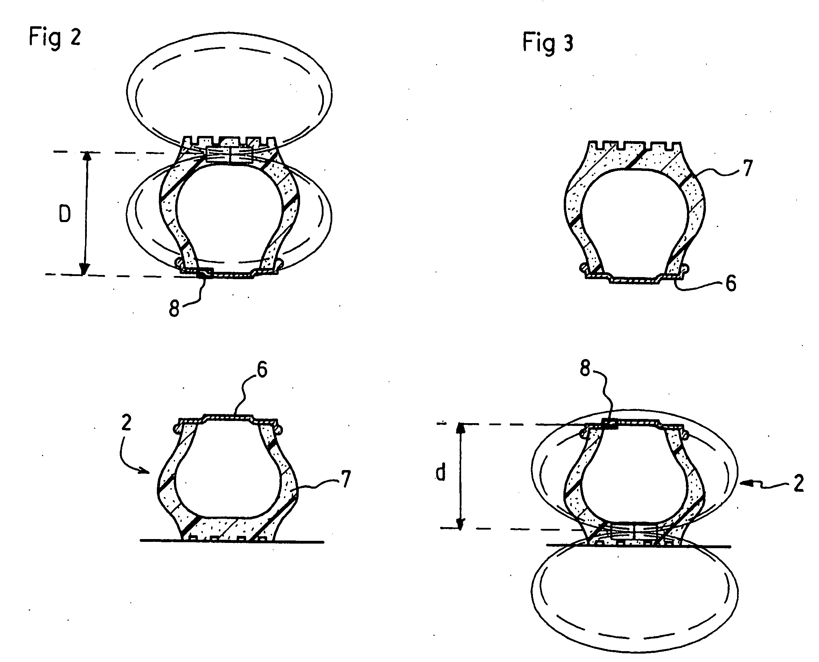

D'autres caractéristiques buts et avantages de l'invention ressortiront de la description détaillée qui suit en référence aux dessins annexés qui en représentent à titre d'exemple non limitatif un mode de réalisation préférentiel. Sur ces dessins :
- **la** **figure 1a** est une vue de dessus schématique d'un véhicule doté d'un système de surveillance de la pression des pneus associé à un dispositif selon l'invention de détermination de la longueur de l'empreinte sur le sol des pneumatiques des roues du dit véhicule,
- **la** **figure 1b** est une vue de détail schématique en perspective représentant une portion de roue de ce véhicule ainsi que le boîtier électronique équipant cette dernière,
- **la** **figure 2** représente, en coupe transversale par un plan vertical, un pneumatique équipé d'un capteur magnétique selon l'invention, lorsque le dit capteur magnétique (au cours de la rotation de la roue) se trouve au niveau de la génératrice supérieure du dit pneumatique (c'est à dire sans contact avec le sol),
- **et la** **figure 3** représente, en coupe transversale par un plan vertical, un même pneumatique équipé d'un capteur magnétique selon l'invention, lorsque le dit capteur magnétique (au cours de la rotation de la roue) se trouve au niveau de la génératrice inférieure du dit pneumatique (c'est à dire en contact avec le sol).

Les figures 1a et 1b représentent, à titre d'exemple d'illustration de l'invention, un véhicule 1 muni de quatre roues 2-5 comportant classiquement une jante 6 (figures 2, 3) chaussée d'un pneumatique 7, le dit véhicule étant, en outre, équipé d'un système de surveillance comportent classiquement, en premier lieu, associé à chaque roue 2-5, un boîtier électronique 8-11 solidarisé sur la jante 6 de la dite roue de façon à être positionné à l'intérieur de l'enveloppe du pneumatique 7.

Chacun de ces boîtiers électroniques 8-11 intègre des capteurs 12 dédiés à la mesure de paramètres, tels que pression et/ou température du pneumatique, connectés à une unité de calcul 13 à microprocesseur alimentée électriquement au moyen d'une pile-bouton 14, et reliée à un émetteur RF connecté à une antenne 15.

Le système de surveillance comprend, également, un calculateur centralisé ou unité centrale 17 situé dans le véhicule 1, comportant un microprocesseur et intégrant un récepteur RF relié à antenne 18 de réception des signaux émis par chacun des quatre boîtiers électroniques 8-11.

De façon usuelle, un tel système de surveillance et notamment son unité centrale 17 sont conçus de façon à informer le conducteur de toute variation anormale des paramètres mesurés par les capteurs 12 associés aux roues 2-5.

Associé à ce système de surveillance et faisant partie intégrante de ce dernier, le dispositif selon l'invention comporte, intégré dans chaque boîtier électronique 8-11, un capteur magnétique 16 adapté pour permettre de déterminer, lors du roulage du véhicule 1, la longueur de l'empreinte sur le sol du pneumatique 7 équipé du dit boîtier électronique

A cet effet, chaque capteur magnétique 16 est positionné de façon à présenter un axe de sensibilité maximale s'étendant parallèlement à l'axe de rotation de la roue 2-5, et conçu pour détecter les variations du champ magnétique produit par l'armature métallique du pneumatique 7, les dites variations résultant des déformations que subit une zone circonférentielle du dit pneumatique située en regard du dit capteur magnétique lorsque, respectivement, la dite zone circonférentielle rentre en contact avec le sol puis quitte le sol.

En effet, tel que représenté aux figures 2 et 3 :
- en l'absence de contact avec le sol de la zone circonférentielle du pneumatique 7 en regard de laquelle est positionné le boîtier électronique 8 monté sur la jante 6, et donc le capteur magnétique 16 intégré dans ce dernier, la distance séparant le dit boîtier électronique et la bande de roulement du pneumatique 7 est maximale et égale à D (figure 2),
- lorsque la zone circonférentielle du pneumatique 7 en regard de laquelle est positionné le boîtier électronique 8 monté sur la jante 6, se trouve en contact avec le sol, la distance séparant le dit boîtier électronique et la bande de roulement du pneumatique 7 est minimale et égale à d (figure 3).

Ainsi, lorsque la zone circonférentielle du pneumatique 7 en regard de laquelle est positionné le boîtier électronique 8 rentre en contact avec le sol, le capteur magnétique 16 mesure une augmentation de champ magnétique fonction de la diminution de la distance (d-D).

Par contre, lorsque la zone circonférentielle du pneumatique 7 en regard de laquelle est positionné le boîtier électronique 8 quitte le sol, le capteur magnétique 16 mesure une diminution de champ magnétique fonction de l'augmentation de la distance (D-d).

Ainsi, une détection des variations du champ magnétique permet de déterminer, lors du roulage d'un véhicule 1, la longueur de l'empreinte sur le sol d'un pneumatique 7 équipé d'un capteur magnétique 16 selon l'invention. En effet, en mesurant le temps séparant deux variations de champ magnétiques (l'une d'elle est provoquée par la mise en contact avec le sol de la zone (appelée zone circonférentielle) du pneumatique dans laquelle est situé le capteur magnétique, et l'autre est provoquée par la fin du contact entre cette zone dans laquelle est située le capteur magnétique et le sol) et en connaissant la vitesse de rotation de la roue (qui est une donnée connue du véhicule) il est alors possible d'en déduire la dimension de la zone du pneumatique en contact avec le sol et donc, entre autres, la charge du véhicule, son état de roulage / arrêt, son état de gonflage / dégonflage...

L'invention permet ainsi de détecter les variations du champ magnétique résultant des déformations que subit la zone circonférentielle du pneumatique (7) située en regard du capteur magnétique (16) lorsque, respectivement, la dite zone circonférentielle rentre en contact avec le sol et quitte le sol.

Par ailleurs, afin d'augmenter le champ magnétique produit par l'armature métallique des pneumatiques 7, et donc la sensibilité du procédé selon l'invention, l'armature métallique du pneumatique 7 est préalablement magnétisée selon un axe de magnétisation parallèle à l'axe de sensibilité maximale du capteur magnétique 16.

A titre d'exemple, cette magnétisation peut ainsi être réalisée dans la seule zone circonférentielle du pneumatique 7 disposée en regard du capteur magnétique 16, au moyen d'un électroaimant, et après montage du pneumatique 7 sur la jante 6 équipée d'un boîtier électroniques 8-11.

L'invention permet donc de déterminer, lors du roulage d'un véhicule 1, la longueur de l'empreinte sur le sol d'un pneumatique 7 chaussant une jante 6 de roue 2-5 du dit véhicule au moyen d'un simple capteur magnétique 16 intégré dans un boîtier électronique 8-11 d'un système de surveillance des paramètres de fonctionnement des roues du dit véhicule.

## Revendications

1. Procédé de détermination, lors du roulage d'un véhicule (1), de la longueur de l'empreinte sur le sol d'un pneumatique (7) comportant une armature métallique, chaussant une jante (6) de roue (2-5) du dit véhicule et un capteur magnétique (16) sur la jante (6), le dit procédé consistant à:
- analyser le signal représentatif du champ magnétique mesuré par le dit capteur magnétique, de façon à détecter les variations du champ magnétique résultant des déformations que subit une zone circonférentielle du pneumatique (7) située en regard du capteur magnétique (16), lorsque, respectivement, la dite zone circonférentielle rentre en contact avec le sol et quitte le sol,
le dit procédé étant **caractérisé en ce qu'**il consiste à:
- déterminer l'intervalle de temps séparant l'instant ou la zone circonférentielle entre en contact avec le sol et l'instant ou elle quitte ce sol, et
- déterminer l'empreinte de la zone en contact avec le sol pendant cet intervalle de temps en tenant compte de la vitesse de rotation de la roue.

2. Procédé de détermination selon la revendication 1 **caractérisé en ce que** l'on positionne le capteur magnétique (16) de façon que le dit capteur magnétique présente un axe de sensibilité maximale s'étendant parallèlement à l'axe de rotation de la roue (2-5).

3. Procédé de détermination selon l'une des revendications 1 ou 2 **caractérisé en ce que** l'on réalise une magnétisation préalable de l'armature métallique du pneumatique (7) dans au moins la zone circonférentielle du dit pneumatique destinée à se trouver en regard du capteur magnétique (16).

4. Procédé de détermination selon les revendications 2 et 3 prises ensemble **caractérisé en ce que**, l'on magnétise l'armature métallique du pneumatique (7) selon un axe de magnétisation parallèle à l'axe de sensibilité maximale du capteur magnétique (16).

5. Procédé de détermination selon la revendication 3 **caractérisé en ce que** l'on réalise la magnétisation préalable de l'armature métallique du pneumatique (7) dans la seule zone circonférentielle du dit pneumatique disposée en regard du capteur magnétique (16), au moyen d'un électroaimant, et après montage du pneumatique (7) sur une jante (6) équipée du capteur magnétique (16).

6. Procédé de détermination selon l'une des revendications précédentes **caractérisé en ce que** l'on intègre le capteur magnétique (16) dans un boîtier électronique (8-11) d'un système de surveillance des paramètres de fonctionnement d'une roue (2-5) du véhicule (1).

## Claims

1. Method for determining, while a vehicle (1) is travelling, the length of the imprint on the ground of a tyre (7) comprising a metal reinforcement, fitted to a rim (6) of a wheel (2-5) of said vehicle and a magnetic sensor (16) on the rim (6), said method consisting in :
- analysing the signal representing the magnetic field measured by said magnetic sensor, so as to detect the variations of the magnetic field resulting from the deformations sustained by a circumferential zone of the tyre (7) situated opposite the magnetic sensor (16), when, respectively, said circumferential zone enters into contact with the ground and leaves the ground,
said method being **characterized in that** it consists in:
- determining the time interval separating the moment when the circumferential zone enters into contact with the ground and the moment when it leaves this ground, and
- determining the imprint of the zone in contact with the ground during this time interval by taking account of the rotation speed of the wheel.

2. Determination method according to Claim 1, **characterized in that** the magnetic sensor (16) is positioned so that said magnetic sensor has an axis of maximum sensitivity extending parallel to the axis of rotation of the wheel (2-5).

3. Determination method according to either of Claims 1 and 2, **characterized in that** the metal reinforcement of the tyre (7) is first magnetized in at least the circumferential zone of said tyre intended to be facing the magnetic sensor (16).

4. Determination method according to Claims 2 and 3 taken together, **characterized in that** the metal reinforcement of the tyre (7) is magnetized along an axis of magnetization parallel to the axis of maximum sensitivity of the magnetic sensor (16).

5. Determination method according to Claim 3, **characterized in that** the metal reinforcement of the tyre (7) is first magnetized in the only circumferential zone of said tyre placed facing the magnetic sensor (16), by means of an electromagnet, and after the tyre (7) has been mounted on a rim (6) fitted with the magnetic sensor (16).

6. Determination method according to one of the preceding claims, **characterized in that** the magnetic sensor (16) is incorporated into an electronic module (8-11) of a system for monitoring the operating parameters of a wheel (2-5) of the vehicle (1).

## Patentansprüche

1. Verfahren zum Bestimmen der Länge des Abdrucks eines Luftreifens (7) auf dem Boden während der Fahrt eines Fahrzeuges (1), wobei der Reifen eine Metallarmierung aufweist und sich auf einer Felge (6) eines Rades (2-5) des Fahrzeuges befindet, ein Magnetdetektor (16) auf der Felge (6) vorgesehen ist und das Verfahren darin besteht, dass
- das das vom Magnetdetektor gemessene Magnetfeld wiedergebende Signal analysiert wird, um die Veränderungen des Magnetfeldes zu detektieren, die aus Verformungen resultieren, die eine Umfangszone des Reifens (7) erfährt, welche gegenüber dem Magnetdetektor (16) angeordnet ist, wenn die Umfangszone mit dem Boden in Kontakt tritt und den Boden verlässt,
**dadurch gekennzeichnet, dass** das Verfahren ferner aus folgenden Schritten besteht:
- Bestimmen des Zeitintervalls, das den Augenblick, in dem die Umfangszone mit dem Boden in Kontakt tritt, und den Augenblick, in dem sie den Boden verlässt, voneinander trennt, und
- Bestimmen des Abdrucks der Kontaktzone mit dem Boden während dieses Zeitintervalls unter Berücksichtigung der Rotationsgeschwindigkeit des Rades.

2. Verfahren zur Bestimmung nach Anspruch 1, **dadurch gekennzeichnet, dass** man den Magnetdetektor (16) so anordnet, dass er eine Achse maximaler Empfindlichkeit aufweist, die sich parallel zur Rotationsachse des Rades (2-5) erstreckt.

3. Verfahren zur Bestimmung nach einem der Ansprüche 1 oder 2, **dadurch gekennzeichnet, dass** man eine Vormagnetisierung der metallischen Armierung des Reifens (7) in mindestens einer Umfangszone des Reifens, die sich gegenüber dem Magnetdetektor (16) befindet, durchführt.

4. Verfahren zur Bestimmung nach den Ansprüchen 2 und 3 zusammen, **dadurch gekennzeichnet, dass** man die metallische Armierung des Reifens (7) gemäß einer Magnetisierungsachse parallel zur Achse maximaler Empfindlichkeit des Magnetdetektors (16) magnetisiert.

5. Verfahren zur Bestimmung nach Anspruch 3, **dadurch gekennzeichnet, dass** man die Vormagnetisierung der metallischen Armierung des Reifens (7) in der einzigen Umfangszone des Reifens, die sich gegenüber dem Magnetdetektor (16) befindet, mit Hilfe eines Elektromagneten realisiert und danach den Reifen (7) auf einer Felge (6) montiert, die mit dem Magnetdetektor (16) versehen ist.

6. Verfahren zur Bestimmung nach einem der vorhergehenden Ansprüche, **dadurch gekennzeichnet, dass** man den Magnetdetektor (16) in eine elektronische Schaltung (8-11) eines Überwachungssystems von Funktionsparametern eines Rades (2-5) des Fahrzeuges (1) integriert.
